# EUROPÄISCHE PATENTSCHRIFT

(11) **EP 2 566 816 B1**
(45) Veröffentlichungstag und Bekanntmachung des Hinweises auf die Patenterteilung: **05.11.2014**
(21) Anmeldenummer: 11717274.2
(22) Anmeldetag: 02.05.2011
(51) Int. Cl.: C01G 23/053, C22B 3/00, C01G 23/047, C22B 3/44, C22B 34/12

(54) **FLOCKUNGSHILFSMITTEL FÜR DIE TITANDIOXIDHERSTELLUNG**
FLOCCULATION ASSISTANT FOR TITANIUM DIOXIDE PRODUCTION
ADJUVANT DE FLOCULATION POUR LA PRÉPARATION DE DIOXYDE DE TITANE

(30) Priorität: 04.05.2010 DE 102010019375
(43) Veröffentlichungstag der Anmeldung: 13.03.2013
(73) Patentinhaber: Sachtleben Pigment GmbH, 47829 Krefeld (DE)
(72) Erfinder: OFFERMANN, Martin, 47447 Moers (DE); RASTELBAUER, Magnus, 47228 Duisburg (DE); DYSCHY, Sascha, 47198 Duisburg (DE)
(74) Vertreter: Nobbe, Matthias
(86) Internationale Anmeldenummer: PCT/EP2011/056949
(87) Internationale Veröffentlichungsnummer: WO 2011/138272

(56) Entgegenhaltungen:
- WO-A1-02/086173
- US-A- 4 578 255
- US-A- 5 133 874
- US-A- 5 512 646

## Beschreibung

Die vorliegende Erfindung bezieht sich auf ein Verfahren zur Gewinnung von Titandioxid nach dem Sulfatverfahren, bei welchem ein titanhaltiger Ausgangsstoff mit Schwefelsäure aufgeschlossen wird, um eine feststoffhaltige Aufschlusslösung (Schwarzlösung) zu erhalten, aus welcher in weiteren, nachgeordneten Verfahrensschritten Titandioxid gewonnen wird, wobei, vor Zuführung zu den weiteren Verfahrensschritten, die Feststoffe aus der Aufschlusslösung sedimentiert und abgetrennt werden, um eine im Wesentlichen feststofffreie Aufschlusslösung (Schwarzlösung) zu erhalten, wobei bei der Sedimentation die Feststoffe durch ein Flockungshilfsmittel und ein Koagulationsmittel ausgeflockt werden, wobei das Flockungshilfsmittel ein kationisches Polymer auf Basis von Aminoalkyl(meth)acrylamid und/oder Aminoalkyl(meth)acrylat enthält und das Koagulationsmittel ein kationisches Polymer auf poly-Diallyldimethylammoniumchlorid (poly-DADMAC) Basis enthält.

Sulfatverfahren zur Herstellung bzw. Gewinnung von Titandioxid sind im Stand der Technik bekannt (siehe z.B. Industrial Inorganic Pigments (Herausgeber G. Buxbaum, Wiley-VCH, Weinheim, 3. Auflage 2005, Seite 59 bis 61) oder Ullmann's Enzyklopädie der Technischen Chemie, 4. Ausgabe, Band 15 (1979)). Danach wird zunächst das titanhaltige Erz, beispielsweise Ilmenit oder Titanschlacke, gemahlen und dann mit Schwefelsäure zu einer Reaktionsmischung gemischt. In dieser Mischung kann die Aufschlussreaktion dann auf unterschiedliche Weise ausgelöst werden. Entweder wird das titanhaltige Erz (Ilmenit oder Titanschlacke) mit einer Schwefelsäure einer Konzentration von ca. 65 bis 80 Gew.-% gemischt und dann in einem ersten Aufschlussschritt die Aufschlussreaktion durch die Zugabe von rauchender Schwefelsäure (Oleum) zu der Reaktionsmischung und die dabei entstehende Reaktionswärme gestartet oder das titanhaltige Erz (Ilmenit oder Titanschlacke) wird mit einer Schwefelsäure einer Konzentration von ca. 86 bis 96 Gew.-% versetzt und dann in einem ersten Aufschlussschritt die Aufschlussreaktion durch Zugabe von Wasser oder verdünnter Schwefelsäure und die dabei entstehende Reaktionswärme ausgelöst. Alternativ ist es auch möglich, die Aufschlussreaktion durch Aufheizen der Reaktionsmischung zu starten. Nach dem Start der exothermen Reaktion steigt die Temperatur der jeweiligen Aufschlussreaktionsmischung schnell auf ungefähr 180 bis 220 °C an und bildet im Allgemeinen einen festen Aufschlusskuchen als feste Reaktionsmasse aus. Während der anschließenden Reifung dieser festen Reaktionsmasse als zweitem Aufschlussschritt fällt die Temperatur langsam auf ungefähr 150 °C ab. Hiernach wird die feste Reaktionsmasse in einem dritten Aufschlussschritt in verdünnter Schwefelsäure und/oder Wasser zu einer noch feststoffhaltigen Lösung oder Suspension, der so genannten feststoffhaltigen Schwarzlösung, gelöst.

Je nach verwendetem titanhaltigem Ausgangsstoff (Ilmenit oder Titanschlacke) weist die Schwarzlösung eine unterschiedliche Zusammensetzung auf. Wird Ilmenit als titanhaltiger Ausgangsstoff eingesetzt, enthält die gewonnene Schwarzlösung dreiwertiges Eisen (Fe(III)) und so gut wie kein dreiwertiges Titan (Ti(III)), sondern fast ausschließlich vierwertiges Titan (Ti(IV)). Der Gehalt an diesen Stoffen hängt im Wesentlichen von der Zusammensetzung des Ilmenits und in geringerem Maße von den Verfahrensbedingungen ab. Für die weitere Bearbeitung der Aufschlusslösung bzw. der Schwarzlösung ist ein möglichst geringer Gehalt an dreiwertigem Eisen (Fe(III)) gewünscht, um den Einbau von Eisen in die Titandioxidmatrix während der Hydrolyse oder in einem nachgeschalteten Filtrations- und Waschschritt zu vermeiden. Eisenverunreinigungen in der Titandioxidmatrix führen beispielsweise bei der Herstellung von Pigmenten zu unerwünschten optischen Eigenschaften und sind daher nachteilig. Aus diesem Grund kann das dreiwertige Eisen in der Schwarzlösung durch Reduktion in zweiwertiges Eisen (Fe(II)) überführt werden. Dies wird beispielsweise dadurch erreicht, dass das dreiwertige Eisen mittels metallischem Eisen, bevorzugt Eisenschrott, zu zweiwertigem Eisen reduziert wird. Das zweiwertige Eisen kann dann in späteren nachgeschalteten Verfahrensschritten als Grünsalz und/oder Filtersalz abgetrennt werden.

Um die feststoffhaltige Schwarzlösung, gegebenenfalls nach erfolgter Reduktion des in der Lösung befindlichen dreiwertigen Eisens, weiterverarbeiten zu können, ist es notwendig diese Schwarzlösung durch Feststoffabtrennung zu einer feststofffreien Lösung oder Aufschlusslösung, der sogenannten feststofffreien Schwarzlösung, aufzubereiten. Dabei werden die in der Schwarzlösung befindlichen Feststoffpartikel, bei denen es sich beispielsweise um Rückstände des titanhaltigen Ausgangsmaterials, beispielsweise nicht aufgeschlossenes Erz, und/oder unerwünschte Nebenprodukte, wie Eisen oder Chrom bzw. schwerlösliche Salze handelt, entfernt. Das ist notwendig, um in den sich anschließenden, weiteren Verfahrensschritten und -stufen Titandioxid in ausreichender Reinheit zu gewinnen.

Die Feststoffabtrennung kann beispielsweise durch Zentrifugation, Sedimentation oder durch Filtration erfolgen. In der Regel erfolgt diese Feststoffabtrennung nach Flockung durch Zugabe von Flockungshilfsmitteln mittels Vakuumfiltern oder Filterpressen, z .B. einem Vakuumdrehfilter oder einer Kammer- oder Membranfilterpresse.

Viele der zu sedimentierenden Partikel in der Schwarzlösung, besitzen eine Ladung oder ein Dipolmoment. Falls die Abstoßung zwischen den einzelnen Teilchen größer ist als die Schwerkraft, können diese Teilchen nicht zum Grund des Behälters sedimentieren und bleiben in Suspension. Erst der Zusatz eines Flockungshilfsmittels kann durch eine entsprechende Gegenladung die Abstoßungskräfte minimieren, so dass sich die einzelnen Partikel sowohl untereinander als auch über Agglomerate miteinander verbinden und aufgrund der Schwerkraft sedimentieren. Entsprechende Flockungshilfsmittel sind im Stand der Technik bekannt und enthalten im Wesentlichen kationische Polymere auf Acrylamid-Basis, insbesondere ein Copolymer aus Acrylamid und einem kationischen Aminoalkylacrylat, wie beispielsweise quartärem Dimethylaminoethylacrylat-Methylchlorid (DMAEA), zum Beispiel poly-DMAEA. Die Molekulargewichte solcher Polymere liegen üblicherweise im Bereich von 2 Mio. g/mol bis über 10 Mio. g/mol.

Es hat sich allerdings gezeigt, dass der zu sedimentierende Rückstand der Schwarzlösung aus einem bimodalen Teilchenspektrum, d.h. aus fein- und feinstanteiligen Partikeln besteht. Mit den bekannten kationischen hochmolekularen Flockungshilfsmitteln wird bevorzugt der Rückstand mit einem erhöhten Anteil an Feinpartikeln geflockt wohingegen der feinstdisperse Rest größtenteils ungebunden bleibt. Die bekannten Verfahren haben daher den Nachteil, dass die Schwarzlösung nach der Feststoffabtrennung im Wesentlichen einen Restgehalt an feinen Feststoffpartikeln mit Durchmessern von 1-5 µm aufweist, der in dieser Verfahrensstufe mit herkömmlichen Verfahren nicht weiter reduziert werden kann. Der Feinanteil wird üblicherweise im weiteren Prozess durch Abtrennung von Grünsalz (Fe(II)sulfat Heptahydrat) in der nachgeschalteten Kristallisation der Schwarzlösung und/oder durch eine nachfolgende Feinfiltration entfernt. Dieses führt bei der Grünsalzabtrennung zu hohen Qualitätsverlusten und weiterhin zu reduzierten Durchsatzmengen in der Feinfiltration.

Der Erfindung liegt daher die Aufgabe zugrunde ein verbessertes Verfahren zur Feststoffabtrennung aus einer feststoffhaltigen Schwarzlösung zu entwickeln, das geeignet ist den Restfeststoffgehalt der Schwarzlösung nach der Feststoffabtrennung (Sedimentation) weiter zu reduzieren.

Diese Aufgabe wird erfindungsgemäß dadurch gelöst, dass ein Verfahren zur Gewinnung von Titandioxid nach dem Sulfatverfahren bereitgestellt wird, bei dem das Ausflocken der Feststoffe aus einer feststoffhaltige Aufschlusslösung durch Zugabe mindestens eines Flockungshilfsmittels und mindestens eines Koagulationsmittels erfolgt, wobei das Flockungshilfsmittel ein kationisches Polymer auf Basis von Aminoalkyl(meth)acrylamid und/oder Aminoalkyl(meth)acrylat und das Koagulationsmittel ein kationisches Polymer auf poly-Diallyldimethylammoniumchlorid (poly-DADMAC) Basis umfasst.

In einem ersten Aspekt betrifft die Erfindung somit ein Verfahren zur Gewinnung von Titandioxid nach dem Sulfatverfahren, wobei das Verfahren umfasst:
- Aufschluss eines titanhaltigen Ausgangsstoffes mit Schwefelsäure, um eine feststoffhaltige Aufschlusslösung zu erhalten, und
- Ausflocken und Abtrennen der Feststoffe aus der feststoffhaltigen Aufschlusslösung, um eine im Wesentlichen feststofffreie Aufschlusslösung zu erhalten, wobei das Ausflocken der Feststoffe durch Zugabe mindestens eines Flockungshilfsmittels und mindestens eines Koagulationsmittels erfolgt, wobei das Flockungshilfsmittel ein kationisches Polymer auf Basis von Aminoalkyl(meth)acrylamid und/oder Aminoalkyl(meth)acrylat und das Koagulationsmittel ein kationisches Polymer auf poly-Diallyldimethylammoniumchlorid (poly-DADMAC) Basis umfasst.

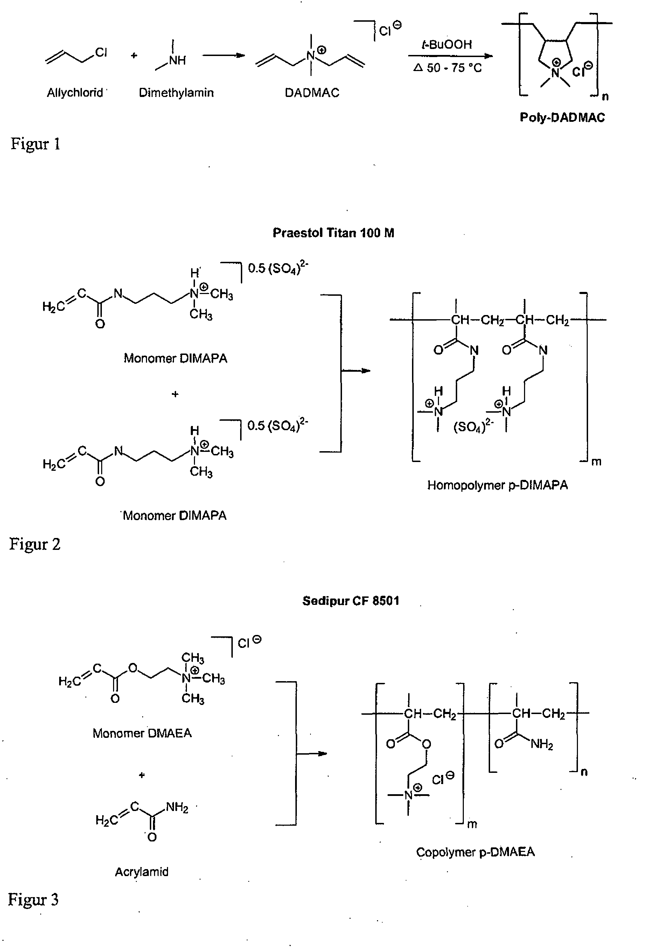

Bei poly-DADMAC handelt es sich um ein Polymer, das durch die Reaktion von Allylchlorid mit Dimethylamin zu Diallyldimethylammoniumchlorid (DADMAC) und anschließende Polymerisation zu poly-DADMAC hergestellt werden kann. Dieser Prozess ist schematisch in Figur 1 dargestellt.

In bevorzugten Ausführungsformen ist der Alkylrest ein linearer oder verzweigter, vorzugsweise linearer Kohlenwasserstoffrest mit 1-10 Kohlenstoffatomen, vorzugsweise Methyl, Ethyl, Propyl, n-Butyl und Isobutyl, noch bevorzugter Ethyl oder Propyl.

In verschiedenen Ausführungsformen der Erfindung ist das kationische Polymer auf Basis von Aminoalkyl(meth)acrylamid oder Aminoalkyl(meth)acrylat ein Homopolymer oder ein Copolymer mit Acrylamid oder Methacrylamid.

In bestimmten Ausführungsformen der Erfindung, ist das kationische Polymer auf Basis von Aminoalkyl(meth)acrylamid oder Aminoalkyl(meth)acrylat ein Homopolymer oder Copolymer auf Basis von Aminoalkylacrylamid oder Aminoalkylacrylat.

Das Aminoalkyl(meth)acrylamid kann beispielsweise ein Dimethylaminopropylacrylamid (N-(3-Dimethylaminopropyl)acrylamid) oder Dimethylaminoethylacrylamid sein, wie beispielsweise quaternisiertes Dimethylaminopropylacrylamid Methylchlorid oder Dimethylaminopropylacrylamid Methylsulfat (3-Acrylamidpropyltrimethylammoniumchlorid oder 3-Acrylamidpropyltrimethylammoniumsulfat) oder Dimethylaminoethylacrylamid Methylchlorid/Methylsulfat (3-Acrylamidethyltrimethylammoniumchlorid oder 3-Acrylamidethyltrimethylammoniumsulfat) oder mit Schwefelsäure protoniertes Dimethylaminopropylacrylamid (3-Acrylamidpropyldimethylammoniumsulfat) oder Dimethylaminoethylacrylamid (3-Acrylamidethyldimethylammoniumsulfat), bzw. ein entsprechendes Methacrylamid.

In einer Ausführungsform ist das kationische Polymer auf Basis von Aminoalkyl(meth)acrylamid oder Aminoalkyl(meth)acrylat ein Homopolymer von mit Schwefelsäure protoniertem Dimethylaminopropylacrylamid (3-Acrylamidpropyldimethylammoniumsulfat). Ein solches Polymer sowie dessen Darstellung ist schematisch in Figur 2 dargestellt.

Der Ausdruck "quaternisiert", "quaterniert" oder "quartär", wie er in dieser Anmeldung verwendet wird, bezieht sich auf ein tetravalentes Atom, vorzugsweise ein Stickstoffatom. Eine solche quartäre Verbindung kann beispielsweise durch die Zugabe einer elektrophilen Verbindung erzeugt werden. Im Fall eines Stickstoffatoms trägt das quartäre N-Atom dann eine positive Ladung. "Quaternisierung" bezieht sich somit auf eine organisch chemische Reaktion, bei der an einem Atom die Zahl der Bindungen (an organische Reste) auf vier erhöht wird. Ein Beispiel ist die Überführung tertiärer Amine in quartäre Ammoniumverbindungen durch Alkylierung.

In weiteren Ausführungsformen der Erfindung kann das Aminoalkyl(meth)acrylat ein Dimethylaminoethylacrylat (DMAEA) oder Dimethylaminopropylacrylat, wie z. B. quartäres Dimethylaminoethylacrylat methylchlorid (2-Acryloxyethyltrimethylammoniumchlorid) oder Dimethylaminopropylacrylat methylchlorid, bzw. ein entsprechendes Methacrylat sein.

In einer Ausführungsform handelt es sich bei dem kationischen Polymer auf Basis von Aminoalkyl(meth)acrylamid oder Aminoalkyl(meth)acrylat um ein Copolymer von 2-Acryloxyethyltrimethylammoniumchlorid und Acrylamid, insbesondere ein statistisches Copolymer. Ein solches Copolymer sowie dessen Darstellung ist schematisch in Figur 3 dargestellt.

In bestimmten Ausführungsformen kann es sich bei dem Flockungshilfsmittel auch um Mischungen der vorgenannten Polymere auf Basis von Aminoalkyl(meth)acrylamid oder Aminoalkyl(meth)acrylat handeln.

Sowohl bei dem Flockungshilfsmittel als auch dem Koagulationsmittel kann es sich um Lösungspolymerisate handeln. Alternativ kann das Flockungshilfsmittel und/oder das Koagulationsmittel ein Polymergranulat sein.

Das Molekulargewicht der kationischen Polymere des Flockungshilfsmittels liegt üblicherweise im Bereich zwischen ca. 2 und >10 Mio Da (g/mol).

Das Molekulargewicht der Polymere des Koagulationsmittels liegt üblicherweise im Bereich <2,5 Mio Da (g/mol), beispielsweise im Bereich von 10.000-2.000.000 g/mol.

In bestimmten Ausführungsformen des Verfahrens gemäß der Erfindung, werden das Flockungshilfsmittel, das Koagulationsmittel oder beide als wässrige Lösung verwendet. In einer solchen wässrigen Lösung kann die Konzentration des Flockungshilfsmittels 0,05 - 0,3 Gew.-%, vorzugsweise etwa 0,1 Gew.-% bezogen auf das Gesamtgewicht der Lösung betragen. Die Konzentration des Koagulationsmittels in der wässrigen Lösung kann im Bereich 0,05 - 1 Gew.-%, vorzugsweise bei etwa 0,1 Gew.-% bezogen auf das Gesamtgewicht der Lösung liegen.

In bestimmten Ausführungsformen des erfindungsgemäßen Verfahrens werden Flockungshilfsmittel und Koagulationsmittel in einem Verhältnis von etwa 2:1 bis etwa 20:1, vorzugsweise etwa 10:1, eingesetzt.

In einer Ausführungsform der erfindungsgemäßen Verfahren kann das Flockungshilfsmittel in Form einer wässrigen Lösung (0,1 Gew.-%) in einer Menge von etwa 1 - 5 Vol.-% bezogen auf das Volumen der Aufschlusslösung zu der Aufschlusslösung gegeben werden. Die Menge des Koagulationsmittels (wässrige Lösung 0,1 Gew.-%), die zu der Aufschlusslösung gegeben wird, kann etwa 0,1 - 1 Vol.-% bezogen auf das Volumen der Aufschlusslösung betragen. In anderen Ausführungsformen beträgt die Menge des Flockungshilfsmittels, die zu der Aufschlusslösung gegeben wird 0,0001 bis 0,01 Gew.-% bezogen auf die Masse der Aufschlusslösung. Die Menge des Koagulationsmittels, die zu der Aufschlusslösung gegeben wird, kann zum Beispiel 0,00001 bis 0,01 Gew.-% betragen.

In bestimmten Ausführungsformen des Verfahrens wird das Koagulationsmittel zeitlich vor dem Flockungshilfsmittel zu der feststoffhaltigen Aufschlusslösung gegeben. In weiteren Ausführungsformen werden Koagulationsmittel und Flockungshilfsmittel gleichzeitig zu der Aufschlusslösung gegeben.

In besonderen Ausführungsformen der Erfindung kann das Koagulationsmittel auch nach dem Flockungshilfsmittel zu der Aufschlusslösung gegeben werden.

Nach dem nach einem der vorhergehenden Ansprüche, dadurch gekennzeichnet, dass die Abtrennung der ausgeflockten Feststoffe von der Schwarzlösung mittels eines Unterlauf- und/oder Überlaufbehälters erfolgt.

Bei dem gemäß dem erfindungsgemäßen Verfahren verwendeten titanhaltigen Ausgangsstoff kann es sich beispielsweise um titanhaltiges Erz wie Ilmenit oder Titanschlacke, oder Mischungen davon handeln.

Das erfindungsgemäße Verfahren kann des Weiteren vor dem Ausflockungsschritt einen Reduktionsschritt beinhalten, in welchem das in der Aufschlusslösung befindliche dreiwertige Eisen durch Zugabe eines geeigneten Reduktionsmittels, wie beispielsweise metallischem Eisen, reduziert wird. In einem solchen Fall wird dann die reduzierte, feststoffhaltige Aufschlusslösung (Schwarzlösung) dem Ausflockungsschritt unterzogen.

In dem erfindungsgemäßen Verfahren, kann die Ausflockung bei erhöhter Temperatur durchgeführt werden. In einer Ausführungsform beträgt daher die Temperatur der Aufschlusslösung bei dem Ausflockungsschritt etwa 40 -90 °C, vorzugsweise etwa 70 °C.

In einem weiteren Aspekt betrifft die vorliegende Erfindung auch ein Kombinationsflockungshilfsmittel für die Ausflockung von Feststoffen aus einer bei der Gewinnung von Titandioxid nach dem Sulfatverfahren durch den Aufschluss eines titanhaltigen Ausgangsstoffes mit Schwefelsäure erhaltenen feststoffhaltigen Aufschlusslösung, wobei das Kombinationsflockungshilfsmittel ein kationisches Polymer auf Basis von Aminoalkyl(meth)acrylamid und/oder Aminoalkyl(meth)acrylat und ein kationisches Polymer auf poly-Diallyldimethylammoniumchlorid (poly-DADMAC) Basis enthält.

In bestimmten Ausführungsformen der Erfindung kann das kationische Polymer aus den oben beschriebenen Homopolymeren und Copolymeren auf Basis von Aminoalkyl(meth)acrylamid und Aminoalkyl(meth)acrylat ausgewählt werden.

Bei dem kationischen Polymer auf Basis von Aminoalkyl(meth)acrylamid oder Aminoalkyl(meth)acrylat, dem kationischen Polymer auf poly-Diallyldimethylammoniumchlorid (poly-DADMAC) Basis oder beiden kann es beispielsweise um Lösungspolymerisate handeln. In einem solchen Fall liegt das Kombinationsflockungshilfsmittel als flüssige Lösung vor, die vor dem Gebrauch nach Bedarf mit einem geeigneten Lösungsmittel, wie zum Beispiel Wasser, verdünnt werden kann. Alternativ kann es sich bei einem oder beiden Bestandteilen um Polymergranulate handeln, die entweder als Feststoff eingesetzt oder vor der Verwendung nach Bedarf in einem geeigneten Lösungsmittel gelöst werden können.

In einer Ausführungsform kann es sich bei dem Kombinationsflockungshilfsmittel auch um eine wässrige Lösung der genannten Polymere handeln. Dabei kann diese wässrige Lösung gebrauchsfertig sein, d.h. etwa 0,05 bis 1 Gew.-% der Polymere enthalten, oder als Konzentrat vorliegen, das vor Gebrauch mit Wasser verdünnt werden muss.

In einer Ausführungsform beträgt das Massenverhältnis des kationischen Polymers auf Basis von Aminoalkyl(meth)acrylamid oder Aminoalkyl(meth)acrylat und des kationischen Polymers auf poly-Diallyldimethylammoniumchlorid (poly-DADMAC) Basis in dem Kombinationsflockungshilfsmittel etwa 2:1 bis 20:1, vorzugsweise etwa 10:1.

Weitere Ausführungsformen der Erfindung sind in den Ansprüchen und den Beispielen enthalten. Die folgenden Beispiele dienen der Veranschaulichung der Erfindung, wobei die Erfindung nicht auf diese speziellen Ausführungsformen beschränkt ist.

### Beispiele

Es wurde ein Vergleich verschiedener, kommerziell erhältlicher kationischer Flockungshilfsmittel hinsichtlich ihres Flockungs- und Sedimentationsverhaltens durchgeführt. Dazu wurde eine reduzierte Ilmenitlösung jeweils mit den Flockungshilfsmitteln Sedipur CF 8501 (BASF AG) und Drewfloc K 4000 (früher: Praestol Titan 100 M (Ashland)) und zusätzlich mit alternativen Flockungshilfsmitteln geflockt und im Folgenden die Sedimentvolumina und Feststoffgehalte in den Überständen bestimmt. Es wurden die folgenden, kommerziell erhältlichen Flockungshilfsmittel und Koagulationsmittel verwendet:
Sedipur CF 8501 (BASF): stark kationisches statistisches Copolymer aus Acrylamid und quartärem Dimethylaminoethylacrylat methylchlorid (DMAEA) in Granulatform, Molekulargewicht ca. 3-5 Mio g/mol, ca. 80 % kationische Ladung.
Sedipur CL 920 (BASF): kationisches Polymere auf poly-Diallyldimethylammoniumchlorid (poly-DADMAC) Basis als Lösungspolymerisat, Molekulargewicht max. 2 Mio g/mol.
Drewfloc K 4000 (früher: Praestol Titan 100 M (Ashland)): sehr stark kationischer Polyelektrolyt aus mit Schwefelsäure protoniertem Dimethylaminopropylacrylamid (DIMAPA) als Lösungspolymerisat, Molekulargewicht 6 - 8 Mio g/mol, ca. 100 % kationische Ladung.
Praestol 185 K (Ashland): niedrigmolekularer, sehr stark kationischer Polyelektrolyt auf Basis eines quaternären Acrylsäurederivates; 1-Propanaminium-N,N,N-Trimethyl-3-[(1-oxo-2-propenyl)amino]-chlorid
Amerfloc 487 (früher: Praestol 187K (Ashland)): niedrigmolekularer, sehr stark kationischer Polyelektrolyt auf Basis von poly-Diallyldimethylammoniumchlorid (poly-DADMAC), Molekulargewicht max. 500.000 g/mol.
Praestol 190 K (Ashland): niedrigmolekulares, sehr stark kationisches polyquaternäres Copolymer auf Basis von Methanamin (Methylamin) und Epichlorhydrin. Sedipur NF 104 (BASF): nichtionisches Flockungshilfsmittel
(Sedipur CL 950 / 951 (BASF): Epichlorhydrin und Dimethylamin Copolymere, Molekulargewicht ca. 50.000 g/mol (CL 950) bzw. ca. 200.000 g/mol (CL 951)

**Tabelle 1 - Analytik der verwendeten Ilmenit-Ausgangslösung**

| Erz | Datum | FS-Geh. [g/l] | Dichte [g/ml] | TiO₂ [%] | TiO₂ [g/l] | Ti³⁺ [g/kg] | Ges. Säure [%] | FeSO₄ [%] | SZ | FeZ |
|---|---|---|---|---|---|---|---|---|---|---|
| Ilmenit | 22.02.2010 | 13 | 1,6 | 10 | 161 | 6 | 19 | 22 | 1,9 | 2,2 |

Je 1000ml der Ilmenit-Ausganglösung wurden in einem Standzylinder auf 60°C +/-1,5°C temperiert und die in Tabelle 2 aufgeführte Menge an Koagulationsmittel (0,1 %ig) zugegeben und mit 5 Hüben eingearbeitet. Danach wurde die in Tabelle 2 aufgeführte Menge an Flockungshilfsmittel (0,1 %ig) zugegeben und mit 15 Hüben eingearbeitet. Als Kontrollen dienten Lösungen, zu denen nur das Flockungshilfsmittel zugegeben wurde.

**Tabelle 2 - Flockungshilfsmittel und Koagulationsmittel**

| Nr. | Koagulationsmittel | | Flockungshilfsmittel | |
|---|---|---|---|---|
| | Produkt | Zugabemenge | Produkt | Zugabemenge |
| A | Sedipur CL 920 | 3,5ml | Sedipur CF 8501 | 35ml |
| B | Sedipur CL 920 | 7,0ml | Sedipur CF 8501 | 35ml |
| C | - | - | Sedipur CF 8501 | 35ml |
| D | - | - | Drewfloc K 4000 (früher Praestol Titan 100 M) | 35ml |
| E | Amerfloc 487 (früher Praestol 187 K) | 3,5ml | Drewfloc K 4000 | 35ml |
| F | Amerfloc 487 | 7,0ml | Drewfloc K 4000 | 35ml |
| G | Sedipur CL 950 | 7,0ml | Sedipur CF 8501 | 35ml |
| H | Sedipur CL 951 | 7,0ml | Sedipur CF 8501 | 35ml |
| I | Sedipur NF 104 | 7,0ml | Sedipur CF 8501 | 35ml |
| J | Praestol 185 K | 7,0ml | Drewfloc K 4000 | 35ml |
| K | Praestol 190 K | 7,0ml | Drewfloc K 4000 | 35ml |

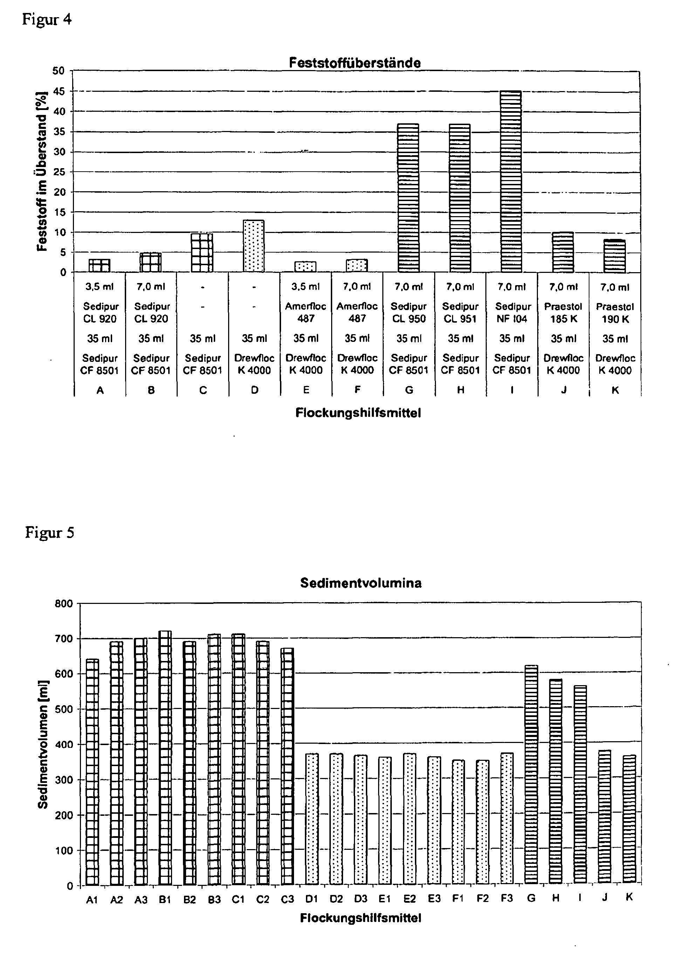

Nach 30 Minuten Inkubation in einem Trockenschrank bei 60° C wurde die Sedimenthöhe bestimmt und ein 50 ml Aliquot (auf der Höhe von ca. 800 ml des Standzylinders) abgenommen. Das abgenommene Aliquot wurde über einen 0,45 µm Membranfilter filtriert, der Filterrückstand gewaschen und bei 900 °C für eine Stunde getrocknet und geglüht um die Feststoffrestmenge gravimetrisch zu bestimmen. Jeder der Versuche A-F wurde dreimal durchgeführt. Die Versuche G-K wurden nur einmal durchgeführt Die Mittelwerte aus diesen drei Versuchen bzw. die Ergebnisse der Einzelversuche sind in Figur 4 und 5 graphisch dargestellt.

Die in den Figuren 4 und 5 dargestellten Ergebnisse zeigen, dass der Feststoffrückstand in der Aufschlusslösung durch den Einsatz der erfindungsgemäßen Kombinationsflockungshilfsmittel deutlich, d.h. in allen Fällen unter 5%, reduziert werden kann, wohingegen die Vergleichsversuche mit einem üblichen Flockungshilfsmittel, d.h. ohne Koagulationsmittel, schlechte Rückstandswerte von über 9 % bzw. fast 13 % zeigen.

Ferner zeigt der Vergleich mit Kombinationsflockungshilfsmitteln, in denen andere Koagulationsmittel als poly-DADMAC eingesetzt werden (Versuche G-K), dass der Feststoffgehalt der Aufschlusslösung im Vergleich zu den Kombinationsflockungshilfsmitteln mit poly-DADMAC Additiven deutlich höher ausfällt. Gemessen an den Flockungsversuchen mit ausschließlich Flockungshilfsmitteln (C+D), wird bei den Versuchreihen G-I zudem ein um fast 4fach höherer Wert an Rückstandswerten nachgewiesen.

## Patentansprüche

1. Verfahren zur Gewinnung von Titandioxid nach dem Sulfatverfahren, wobei das Verfahren umfasst:
- Aufschluss eines titanhaltigen Ausgangsstoffes mit Schwefelsäure, um eine feststofthaltige Aufschlusslösung zu erhalten, und
- Ausflocken und Abtrennen der Feststoffe aus der feststoffhaltigen Aufschlusslösung, um eine im Wesentlichen feststofffreie Aufschlusslösung zu erhalten, **dadurch gekennzeichnet, dass**
das Ausflocken der Feststoffe durch Zugabe mindestens eines Flockungshilfsmittels und mindestens eines Koagulationsmittels erfolgt, wobei das Flockungshilfsmittel ein kationisches Polymer auf Basis von Aminoalkyl(meth)acrylamid und/oder Aminoalkyl(meth)acrylat und das Koagulationsmittel ein kationisches Polymer auf poly-Diallyldimethylammoniumchlorid (poly-DADMAC) Basis umfasst.

2. Verfahren nach Anspruch 1, **dadurch gekennzeichnet, dass** das Flockungshilfsmittel ein kationisches Polymer auf Basis eines Copolymers aus Acrylamid und einem Aminoalkyl(meth)acrylamid oder Aminoalkyl(meth)acrylat enthält.

3. Verfahren nach Anspruch 1, **dadurch gekennzeichnet, dass** das Flockungshilfsmittel ein kationisches Polymer auf Basis eines Homopolymers aus Aminoalkyl(meth)acrylamid oder Aminoalkyl(meth)acrylat enthält.

4. Verfahren nach einem der Ansprüche 1-3, **dadurch gekennzeichnet, dass** das Aminoalkyl(meth)acrylamid ausgewählt wird aus der Gruppe bestehend aus Dimethylaminopropylacrylamid (DIMAPA), Dimethylaminopropylmethacrylamid, Dimethylaminoethylacrylamid und Dimethylaminoethylmethacrylamid und Mischungen davon.

5. Verfahren nach einem der Ansprüche 1-4, **dadurch gekennzeichnet, dass** das Aminoalkyl(meth)acrylat ausgewählt wird aus der Gruppe bestehend aus Dimethylaminoethylacrylat (DMAEA), Dimethylaminoethylmethacrylat, Dimethylaminopropylacrylat und Dimethylaminopropylmethacrylat und Mischungen davon.

6. Verfahren nach Anspruch 4, **dadurch gekennzeichnet, dass** das Dimethylaminopropylacrylamid (DIMAPA) mit Schwefelsäure protoniertes oder mit Methylchlorid oder Methylsulfat quaternisiertes Dimethylaminopropylacrylamid ist.

7. Verfahren nach Anspruch 5, wobei das Dimethylaminoethylacrylat (DMAEA) quartäres Dimethylaminoethylacrylat methylchlorid (2-Acryloxyethyltrimethylammoniumchlorid) ist.

8. Verfahren nach einem der vorhergehenden Ansprüche, **dadurch gekennzeichnet, dass** Flockungshilfsmittel und Koagulationsmittel in einem Verhältnis von 2:1 bis 20:1 eingesetzt werden.

9. Verfahren nach einem der vorhergehenden Ansprüche, **dadurch gekennzeichnet, dass** das Flockungshilfsmittel in einer Menge von 0,0001 - 0,01 Gew.-% bezogen auf das Gewicht der Aufschlusslösung zu der Aufschlusslösung gegeben wird.

10. Verfahren nach einem der vorhergehenden Ansprüche, **dadurch gekennzeichnet, dass** das Koagulationsmittel in einer Menge von 0,00001 - 0,01 Gew.-% bezogen auf das Gewicht der Aufschlusslösung zu der Aufschlusslösung gegeben wird.

11. Verfahren nach einem der vorhergehenden Ansprüche, **dadurch gekennzeichnet, dass** die Temperatur der Aufschlusslösung bei dem Ausflockungsschritt 40 - 90°C beträgt.

12. Verfahren nach einem der vorhergehenden Ansprüche, **dadurch gekennzeichnet, dass** das Ausflocken der Feststoffe aus der feststoffhaltigen Aufschlusslösung für 15 - 60 Minuten durchgeführt wird.

13. Kombinationsflockungshilfsmiftel für die Ausflockung von Feststoffen aus einer bei der Gewinnung von Titandioxid nach dem Sulfatverfahren durch den Aufschluss eines titanhaltigen Ausgangsstoffes mit Schwefelsäure erhaltenen feststoffhaltigen Aufschlusslösung, **dadurch gekennzeichnet, dass** das Flockungshilfsmittel ein kationisches Polymer auf Basis von Aminoalkyl(meth)acrylamid und/oder Aminoalkyl(meth)acrylat und ein kationisches Polymer auf poly-Diallyldimethylammoniumchlorid (poly-DADMAC) Basis enthält.

14. Kombinationsflockungshilfsmittel nach Anspruch 13, **dadurch gekennzeichnet, dass** das kationische Polymer auf Basis von Aminoalkyl(meth)acrylamid und/oder Aminoalkyl(meth)acrylat ein Copolymer aus Acrylamid und einem Aminoalkyl(meth)acrylat enthält.

15. Kombinationsflockungshilfsmittel nach Anspruch 13, **dadurch gekennzeichnet, dass** das kationische Polymer auf Basis von Aminoalkyl(meth)acrylamid und/oder Aminoalkyl(meth)acrylat ein Homopolymer aus einem Aminoalkyl(meth)acrylamid enthält.

16. Kombinationsflockungshilfsmittel nach einem der Ansprüche 13-15, **dadurch gekennzeichnet, dass** das Massenverhältnis des kationischen Polymers auf Acrylamid-Basis und des kationischen Polymers auf poly-Diallyldimethylammoniumchlorid (poly-DADMAC) in dem Kombinationsflockungshilfsmittel 2:1 bis 20:1 beträgt.

## Claims

1. Process for obtaining titanium dioxide by sulphate process, in which the process comprises:
- Digesting a titanium-containing starting material with sulfuric acid to obtain a solid containing digestion solution, and
- Flocculating and separating the solids from the solid-containing digestion solution to obtain a digestion solution, which is substantially free of solid,
**characterized in that**
the flocculation of the solid is achieved by addition of at least one flocculation aid and at least one coagulant, wherein the flocculation aid comprises a cationic polymer based on aminoalkyl(meth)acrylamide and/or aminoalkyl(meth)acrylate and the coagulant comprises a cationic polymer based on polydiallyldimethylammoniumchloride (poly-DADMAC).

2. Process according to claim 1, **characterized in that** the flocculation aid contains a cationic polymer on the basis of a copolymer of acrylamide and aminoalkyl(meth)acrylamide or aminoalkyl(meth)acrylate.

3. Process according claim 1, **characterized in that** the flocculation aid contains a cationic polymer on the basis of a homopolymer of aminoalkyl(meth)acrylamide or aminoalkyl(meth)acrylate.

4. Process according to any one of claims 1 - 3, **characterized in that** the aminoalkyl(meth)acrylamide is selected from the group consisting of dimethylaminopropylacrylamide (DIMAPA), dimethylaminopropylmethacrylamide, dimethylaminoethylacrylamide and dimethylaminoethylmethacrylamide and mixtures thereof.

5. Process according to any one of the claims 1 - 4, **characterized in that** the aminoalkyl(meth)acrylate is selected from the group consisting of dimethylaminoethylacrylate (DMAEA), dimethylaminoethylmethacrylate, dimethylaminoproplyacrylate and dimethylaminopropylmethacrylate and mixtures thereof.

6. Process according to claim 4, **characterized in that** the dimethylaminopropylacrylamide (DIMAPA) is a dimethylaminopropylacrylamide protonated with sulfuric acid or quaternized with methylchloride or methylsulphate.

7. Process according to claim 5, wherein the dimethylaminoethylacrylate (DMAEA) is quaternary dimethylaminoethylacrylate methylchloride (2-acryloxyethyltrimethylammoniumchloride).

8. Process according to any one of the preceding claims, **characterized in that** the flocculation aid and the coagulant are used in a ratio of from 2:1 to 20:1.

9. Process according to any one of the preceding claims, **characterized in that** the flocculation aid is added to the digestion solution in an amount of 0.0001 - 0.01 wt.% based on the weight of digestion solution.

10. Process according to any one of the preceding claims, **characterized in that** the coagulant is added to the digestion solution in an amount of 0.00001 - 0.01 wt.% based on the weight of digestion solution.

11. Process according to any one of the preceding claims, **characterized in that** the temperature of the digestion solution at the flocculation step is 40 - 90 °C.

12. Process according to any one of the preceding claims, **characterized in that** the flocculation of the solid from the solid containing digestion solution is conducted for 15 - 60 minutes.

13. Combined flocculation aid for the flocculation of solid from a solid-containing digestion solution obtained in the production of titanium dioxide in the sulphate process by digesting a titanium containing starting material with sulfuric acid, **characterized in that** the flocculation aid contains a cationic polymer based on aminoalkyl(meth)acrylamide and/or aminoalkyl(meth)acrylate and a cationic polymer based on polydiallyldimethylammoniumchloride (poly-DADMAC).

14. Combined flocculation aid according to claim 13, **characterized in that** the cationic polymer based on aminoalkyl(meth)acrylamide and/or aminoalkyl(meth)acrylate contains a copolymer of acrylamide and an aminoalkyl(meth)acrylate.

15. Combined flocculation aid according to claim 13, **characterized in that** the cationic polymer based on aminoalkyl(meth)acrylamide and/or aminoalkyl(meth)acrylate contains a homopolymer of an aminoalkyl(meth)acrylamide.

16. Combined flocculation aid according to any one of the claims 13 - 15, **characterized in that** the mass ratio of the cationic polymer based on acrylamide to the cationic polymer on the basis of polydiallyldimethylammoniumchloride (poly-DADMAC) in the combined flocculation aid is in the range of 2:1 to 20:1.

## Revendications

1. Procédé de préparation de dioxyde de titane par le procédé au sulfate, lequel procédé comprend les étapes suivantes :
- dissolution d'une substance de départ contenant du titane avec de l'acide sulfurique afin d'obtenir une solution de dissolution contenant des matières solides, et
- floculation et séparation des matières solides de la solution de dissolution contenant des matières solides afin d'obtenir une solution de dissolution sensiblement exempte de matières solides,
**caractérisé en ce que**
la floculation des matières solides est réalisée par ajout d'au moins un adjuvant de floculation et d'au moins un agent de coagulation, l'adjuvant de floculation contenant un polymère cationique à base de (méth)acrylamide d'aminoalkyle et/ou de (méth)acrylate d'aminoalkyle et l'agent de coagulation contenant un polymère cationique à base de polychlorure de diallyldiméthylammonium (polyDADMAC).

2. Procédé selon la revendication 1, **caractérisé en ce que** l'adjuvant de floculation contient un polymère cationique à base d'un copolymère d'acrylamide et d'un (méth)acrylamide d'aminoalkyle ou d'un (méth)acrylate d'aminoalkyle.

3. Procédé selon la revendication 1, **caractérisé en ce que** l'adjuvant de floculation contient un polymère cationique à base d'un homopolymère de (méth)acrylamide d'aminoalkyle ou de (méth)acrylate d'aminoalkyle.

4. Procédé selon l'une des revendications 1 à 3, **caractérisé en ce que** le (méth)acrylamide d'aminoalkyle est sélectionné dans le groupe composé du diméthylaminopropylacrylamide (DIMAPA), du diméthylaminopropylméthacrylamide, du diméthylaminoéthylacrylamide et du diméthylaminoéthylméthacrylamide et de mélanges de ceux-ci.

5. Procédé selon l'une des revendications 1 à 4, **caractérisé en ce que** le (méth)acrylate d'aminoalkyle est sélectionné dans le groupe composé du diméthylaminoéthylacrylate (DMAEA), du diméthylaminoéthylméthacrylate, du diméthylaminopropylacrylate et du diméthylaminopropylméthacrylate et de mélanges de ceux-ci.

6. Procédé selon la revendication 4, **caractérisé en ce que** le diméthylaminopropylacrylamide (DIMAPA) est du diméthylaminopropylacrylamide protoné avec de l'acide sulfurique ou quaternisé avec du chlorure de méthyle ou du sulfate de méthyle.

7. Procédé selon la revendication 5, dans lequel le diméthylaminoéthylacrylate (DMAEA) est du méthylchlorure de diméthylaminoéthylacrylate quaternaire (2- chlorure d'acryloxyéthyltriméthylammonium).

8. Procédé selon l'une des revendications précédentes, **caractérisé en ce que** l'adjuvant de floculation et l'agent de coagulation sont utilisés dans un rapport de 2:1 à 20:1.

9. Procédé selon l'une des revendications précédentes, **caractérisé en ce que** l'adjuvant de floculation est ajouté à la solution de dissolution dans une quantité de 0,0001 à 0,01 % en poids par rapport au poids de la solution de dissolution.

10. Procédé selon l'une des revendications précédentes, **caractérisé en ce que** l'agent de coagulation est ajouté à la solution de dissolution dans une quantité de 0,00001 à 0,01 % en poids par rapport au poids de la solution de dissolution.

11. Procédé selon l'une des revendications précédentes, **caractérisé en ce que** la température de la solution de dissolution lors de l'étape de floculation est comprise entre 40 et 90 °C.

12. Procédé selon l'une des revendications précédentes, **caractérisé en ce que** la floculation des matières solides de la solution de dissolution contenant des matières solides est effectuée pendant 15 à 60 minutes.

13. Adjuvant de floculation combiné pour la floculation de matières solides d'une solution de dissolution contenant des matières solides obtenue lors de la préparation de dioxyde de titane par le procédé au sulfate par la dissolution d'une substance de départ contenant du titane avec de l'acide sulfurique, **caractérisé en ce que** l'adjuvant de floculation contient un polymère cationique à base de (méth)acrylamide d'aminoalkyle et/ou de (méth)acrylate d'aminoalkyle et un polymère cationique à base de polychlorure de diallyldiméthylammonium (polyDADMAC).

14. Adjuvant de floculation combiné selon la revendication 13, **caractérisé en ce que** le polymère cationique à base de (méth)acrylamide d'aminoalkyle et/ou de (méth)acrylate d'aminoalkyle contient un copolymère d'acrylamide et d'un (méth)acrylate d'aminoalkyle.

15. Adjuvant de floculation combiné selon la revendication 13, **caractérisé en ce que** le polymère cationique à base de (méth)acrylamide d'aminoalkyle et/ou de (méth)acrylate d'aminoalkyle contient un homopolymère d'un (méth)acrylamide d'aminoalkyle.

16. Adjuvant de floculation combiné selon l'une des revendications 13 à 15, **caractérisé en ce que** le rapport massique du polymère cationique à base d'acrylamide et du polymère cationique à base de polychlorure de diallyldiméthylammonium (polyDADMAC) dans l'adjuvant de floculation combiné est compris entre 2:1 et 20:1.
